# EUROPÄISCHE PATENTSCHRIFT

(11) **EP 1 483 150 B1**
(45) Veröffentlichungstag und Bekanntmachung des Hinweises auf die Patenterteilung: **14.02.2007**
(21) Anmeldenummer: 03724913.3
(22) Anmeldetag: 11.03.2003
(51) Int. Cl.: B64D 9/00, B65G 67/00

(54) **SYSTEM ZUM BE- UND ENTLADEN VON STÜCKGUT IN EINEM LADERAUM, INSBESONDERE EINES FLUGZEUGS, SOWIE ZWISCHENFÖRDEREINRICHTUNG ODER FÖRDEREINHEIT HIERFÜR**
SYSTEM FOR LOADING AND UNLOADING UNIT LOADS INTO A CARGO HOLD, IN PARTICULAR OF AN AIRCRAFT, AND INTERMEDIATE TRANSPORT DEVICE OR CORRESPONDING TRANSPORT UNIT
SYSTEME DE CHARGEMENT ET DE DECHARGEMENT D'ARTICLES DANS UN ESPACE DE CHARGEMENT, EN PARTICULIER D'UN AVION, ET SYSTEME DE TRANSPORT INTERMEDIAIRE OU UNITE DE TRANSPORT CORRESPONDANT (E)

(30) Priorität: 11.03.2002 DE 10210575; 11.03.2002 DE 20212383 U; 21.08.2002 DE 10238249
(43) Veröffentlichungstag der Anmeldung: 08.12.2004
(60) Teilanmeldung: 06026624.4
(73) Patentinhaber: Telair International AB, 224 78 Lund (SE)
(72) Erfinder: HELMNER, Anders, S-237 34 Bjärred (SE)
(74) Vertreter: Kuhnen & Wacker
(86) Internationale Anmeldenummer: PCT/EP2003/002494
(87) Internationale Veröffentlichungsnummer: WO 2003/076267

(56) Entgegenhaltungen:
- EP-A- 0 263 540
- WO-A-01/51356
- WO-A-89/02852
- DE-A- 4 238 095
- US-A- 3 356 236
- US-A- 4 050 655
- US-A- 4 544 319

## Beschreibung

Die vorliegende Erfindung betrifft ein System zum Be- und Entladen von Stückgut in einem Laderaum eines Flugzeugs, nach dem Oberbegriff des Anspruchs 1.

Beim Be- und Entladen von Stückgut in Laderäume muß dieses generell zunächst von der Umgebung zur Laderaumöffnung und durch diese hindurch gebracht, im Laderaum nach einem freien Platz gesucht und das Stückgut dort abgelegt bzw. aufgestapelt oder verstaut werden. Das Be- und Entladen von Stückgut in einem Laderaum eines Flugzeugs gestaltet sich besonders schwierig, da das Stückgut zunächst - bei einer auf das nähere Umfeld des Flugzeugs beschränkten Betrachtung - vom Rollfeld hinauf zur Laderaumöffnung im Flugzeugrumpf gebracht, dort - unter Vermeidung jeglicher Beschädigung des Flugzeugrumpfes bzw. der diesen ausbildenden Struktur - entgegen genommen und dann an einen freien Platz im Laderaum des Flugzeugs verbracht und ggf. möglichst kompakt gestapelt oder verstaut werden muß. Hierbei sind die häufig engen Raumverhältnisse ein weiteres Erschwernis, da beispielsweise bei einer Laderaumtiefe von 8 m oder mehr und einer Laderaumhöhe von nur etwa 1,15 m in einer Boeing 737 Personal, das mit dem Be- und Entladen des Flugzeugs betraut ist, nur in gebückter, kniender oder gehockter Haltung arbeiten kann. Dabei muß die Entfernung von der Laderaumöffnung zum hinteren Ende des Laderaums auf den Knien rutschend überwunden werden. Beim Verstauen bzw. Stapeln des Stückguts muß das Personal dieses häufig sich über die Schulter nach hinten drehend aufnehmen, hoch wuchten und nach vorne ablegen. Dabei können Beschädigungen oder Verletzungen der Muskeln, Sehnen oder Bänder als auch des Stützapparats leicht auftreten. Weiter erschwerend kommt hinzu, daß aus Wirtschaftlichkeitsgründen heutzutage wenigstens 5 Tonnen Stückgut innerhalb von weniger als 10 Minuten be- oder entladen werden müssen. Hierbei muß das im Flugzeugrumpf im Laderaum beschäftigte Personal zudem darauf achten, daß weder Stückgut beschädigt noch die Struktur des Laderaums verletzt wird. Dies führt dazu, daß die ohnehin den Stützapparat des betroffenen Personals stark belastenden Bewegungen schnell und unachtsam ausgeführt werden, was das Verletzungsrisiko beim Personal weiter steigert.

Um Stückgut vom Rollfeld zur Laderaumöffnung bzw. in den im Inneren des Flugzeugs direkt hinter der Laderaumöffnung liegenden Nahbereich zu bringen, von dem aus es dann vom Personal im Laderaum verstaut werden kann, sind im Prinzip z.B. folgende Ansätze bekannt:

Die DE 199 61 349 A1 beschreibt ein fahrbares Gerät zum Be- und Entladen von Flugzeugen, mit einem Fahrgestell und einer auf dem Fahrgestell angeordneten Fördereinrichtung, wie beispielsweise einem Förderband. Um mittels dieses fahrbaren Geräts verschiedenartige Lasten wie beispielsweise Stückgut, vom Rollfeld oder von einem auf dem Rollfeld beim Flugzeug ankommenden Transportfahrzeugs in das Flugzeug fördern zu können, wird in der DE 199 61 349 A1 vorgeschlagen, daß dieses fahrbare Gerät einen Hauptförderer aufweist, der in seiner Höhe und in seiner in Förderrichtung verlaufenden Neigung gegenüber dem Fahrgestell verstellbar ist, sowie mindestens einen an einem Längsende des Hauptförderers um eine horizontale Querachse gegenüber diesem verschwenkbaren Übergabeförderer aufweist. Mit einem solchen fahrbaren Gerät kann Stückgut vom Rollfeld nach oben zur Laderaumöffnung des Flugzeugs verbracht und durch diese hindurch ins Flugzeug hinein übergeben werden.

Da jedoch nicht auf jedem Flughafen solcherlei fahrbares Transportgerät zur Verfügung steht, ist in der DE 297 21 959 U1 vorgeschlagen worden, ein solches Gerät im Flugzeug mitzuführen. Die in der DE 297 21 959 U1 beschriebene Gepäckladevorrichtung für Flugzeuge mit einem Bandförderer ist auf einer Flugzeugfrachtpalette montiert und im Flugzeugrumpf verstaut. Beim Betrieb wird der Bandförderer aus der Ladeöffnung des Flugzeugs herausgefahren, zum Rollfeld nach unten geschwenkt, die erforderliche Länge eingestellt und mit dem unteren Ende dann auf dem Rollfeld abgestützt, so daß Stückgut vom Rollfeld zur Laderaumöffnung hinauf befördert oder aus dieser heraus hinunter transportiert werden kann.

Die WO 98/54073 beschreibt ein mit dessen vorderen Abschnitt durch eine Laderaumöffnung in den Laderaum eines Flugzeugs hineinführbares, dort wiederum über den Laderaumboden vermittels Rollen verfahrbares Förderorgan, das ein vom Rollfeld bis zum hinteren Ende des Laderaum führendes Förderband bereit stellen soll, zur Unterstützung des auch hier manuell von einer Person auszuführenden Be- und Entladevorgangs. Zum Betrieb des Förderorgans wird dieses auf dem Rollfeld an das Flugzeug herangeführt, ein erster Abschnitt einer schiefen Ebene gleichend auf die Höhe der Laderaumöffnung gebracht, ein weiterer Abschnitt in die Laderaumöffnung hineingeführt, dort um 90° umgebogen und dann ein weiterer Abschnitt parallel zur Bordwand im Laderaum von der Laderaumöffnung bis zum hinteren Ende des Laderaums erstreckt. Ein zusätzlicher Tisch, der am hinteren Ende auf dem Boden aufgerichtet wird, soll sich über die gesamte Breite des Laderaums erstrecken und kann in der Höhe variiert werden. Damit können Koffer, Säcke oder dergleichen Güter Be- und Entladen werden, wobei diese Güter beim Beladen vermittels des Förderbandes vom Rollfeld bis zum Ende des Förderbandes im Laderaum vor den Tisch transportiert und dort von der am Tisch knieenden Person auf den Tisch gezogen und über diesen weiterziehend dann oben auf den aufzuschichtenden Stückgutstapel geschoben werden. Das in der WO 98/540734 beschriebene Gerät hat zum Nachteil, daß sowohl bei unsachgemäßer Handhabung des Tisches als auch bei nicht sachgemäßer Handhabung des Förderorgans eine Verletzung bzw. Beschädigung der Flugzeugstruktur zwangsläufig zu befürchten ist. Wenn der Tisch mit darauf liegendem Stückgut in belastetem Zustand in der Höhe verändert wird, besteht die Gefahr, daß dessen an die Bordwand angrenzenden Enden diese sofort beschädigen. Beim Einführen des extrem langen und unhandlichen Förderbandes ist eine Beschädigung der Laderaumöffnung nicht auszuschließen. Zudem ist dieses Hilfsgerät wenig hilfreich, da es immer dann, wenn eine Stückgutreihe aufgeschichtet ist, um ein Stück zurückgefahren, neu positioniert und mit dem ebenfalls neu auszurichtenden Tisch verbunden werden muß.

In der DE 100 07 332 A1 ist eine alternative Ausführungsform eines auf dem Rollfeld verfahrbaren Basisfahrzeugs mit einem bis in den Laderaum hineinreichenden endlosen Förderband diskutiert. Die DE 100 07 332 A1 schlägt ein reversierbares Fördermittel für Stückgüter mit schwenkbarem und in der Höhe und Länge verstellbaren Ausleger zum Be- und Entladen von Reisegepäckstücken bei Passagierflugzeugen vor. Zwischenübergabestationen sollen vermieden werden. Den Umschlag der Gepäckstücke bzw. das Verstauen und Entnehmen derselben im Laderaum bewerkstelligen auch hier wiederum Personen vor Ort von Hand.

Um die Arbeit des Personals im Laderaum zu erleichtern, ist von der Anmelderin beispielsweise in der DE 42 38 095 A1 eine Beladevorrichtung für einen Laderaum eines Flugzeugs vorgeschlagen worden. Diese im rauhen Alltag beim Be- und Entladen von Flugzeugen bewährte Laderaumbeladevorrichtung wird von der Anmelderin u. a. mit dem Prospekt "The sliding carpet loading system" erfolgreich beworben. Diese den Boden des Laderaums flächig abdeckende Transporteinrichtung dient zur, insbesondere taktweisen, Förderung des Stückgutes in Richtung auf das Innere des Laderaumes bzw. dessen hinteres Ende beim Beladen bzw. von diesem weg beim Entladen, wobei die Transporteinrichtung mit deren vorderem Ende bis in den Bereich der Laderaumöffnung im Flugzeugrumpf reicht, und ist in einer besonders erfolgreichen Ausführungsform als Transportteppich ausgestaltet.

Eine Anlage, die eine Zwischenförderung des Ladeguts von einem äußeren Förderorgan auf ein im Laderaum des Flugzeugs befindliches Förderband bewerkstelligt, ist durch das Dokument EP-A-0 263 540 bekannt. Dieses Dokument beschreibt eine Zwischenfördereinrichtung, welche das Ladegut quer und längs zur Flugzeugachse im Bereich der Ladetür bewegt, vom äußeren Förderorgan weitertransportiert und auf das Förderband im Innern des Laderaumes ablegt.

Diese Geräte bzw. Transporteinrichtungen helfen zwar, den Einsatz menschlicher Arbeitskraft im Laderaum zu erleichtern oder zu reduzieren, sie machen jedoch den Einsatz menschlicher Arbeitskraft, insbesondere im Bereich der Laderaumluke, immer noch erforderlich. Personal muß auch weiterhin in äußerst unbequemer Arbeitshaltung das vom äußeren Förderorgan vom Rollfeld zur Laderaumöffnung hinauf beförderte Gepäck bzw. Stückgut entgegennehmen und über die Breite des Flugzeugrumpfes auf dem vorderen Ende der beispielsweise als Transportteppich ausgebildeten Transporteinrichtung im Laderaum ablegen und mit deren Hilfe sukzessive in das Innere des Laderaums befördern. Dementsprechend muß zum Entladen wiederum Personal eingesetzt werden, das mittels der Transporteinrichtung im Laderaum das Stückgut sukzessive zu sich in den Bereich der Laderaumöffnung heranholt, das Stückgut aufnimmt, in beschwerlicher Haltung, sei es gebückt oder gehockt zum in die Laderaumöffnung hineinragenden Ende der äußeren Fördereinrichtung schleppt, dort aufgibt und mit der äußeren Fördereinrichtung dann zum Rollfeld hinunter befördert.

Zudem ist das mit diesen Arbeiten betraute Personal häufig schlecht bezahlt, unzureichend ausgebildet und damit nur ungenügend motiviert. Dementsprechend kommt es oft zu versehentlichen Beschädigungen der Flugzeugstruktur im Laderaum und insbesondere im Bereich der Laderaumöffnung, obgleich diese ausdrücklich vermieden werden sollen. Dies führt dann bei deren Auftreten zu immensen Kosten aufgrund der erforderlichen Reparaturen und des damit verbundenen Stillstands des Flugzeugs.

Dementsprechend ist es Aufgabe der vorliegenden Erfindung unter Vermeidung der vorstehenden Nachteile ein System vorzuschlagen, das die bekannten Transporteinrichtungen im Laderaum des Flugzeugs mit den außerhalb des Flugzeugs befindlichen Förderorganen so zu einem Gesamtkonzept verbindet, daß Stückgut automatisch ohne Einsatz von Personal im Laderaum vom Rollfeld beim Beladen in den Laderaum verbracht und dort automatisch verstaut und beim Entladen wieder automatisch aus dem Laderaum zurück auf das Rollfeld transportiert werden kann.

Ferner ist es Aufgabe der vorliegenden Erfindung, ein System vorzuschlagen, mit dem bzw. mit der die bekannten Transporteinrichtungen im Laderaum des Flugzeugs mit den außerhalb des Flugzeugs befindlichen Förderorganen so zu einem Gesamtkonzept kombiniert werden können, daß Stückgut vom Rollfeld beim Beladen in den Laderaum verbracht und dort verstaut und beim Entladen wieder aus dem Laderaum zurück auf das Rollfeld transportiert werden kann, ohne dabei die Gesundheit des eingesetzten Personals zu gefährden.

Diese Aufgabe wird gelöst durch die Merkmale des Anspruchs 1.

Die vorliegende Erfindung schlägt ein System zum Be- und Entladen von Stückgut in einem Laderaum eines Flugzeugs vor, mit einer den Boden des Laderaums flächig abdeckenden Transporteinrichtung zur, insbesondere taktweisen, Förderung des Stückgutes in Richtung auf das innere Ende des Laderaums beim Beladen bzw. von diesem weg beim Entladen, wobei die Transporteinrichtung mit deren vorderen Ende bis in den Bereich der Laderaumöffnung im Flugzeugrumpf reicht, und mit einem der Außenseite des Flugzeuges an die Laderaumöffnung anschließenden Förderorgans zum Transport des Stückgutes zwischen der Rollfeldebene und der Laderaumöffnung, wobei erstmals vorgesehen ist, daß zwischen den flugzeugseitigen Ende des Förderorgans und dem vorderen Ende der Transporteinrichtung im Laderaum wenigstens eine Zwischenfördereinrichtung angeordnet ist, mit der das Stückgut beim Beladen zunächst in Querrichtung zur Flugzeuglängsachse tiefer in den Flugzeugrumpf hinein förderbar ist und sodann in Flugzeuglängsrichtung förderbar und auf dem vorderen Ende der Transporteinrichtung im Laderaum ablegbar ist, und mit der beim Entladen über das vordere Ende der Transporteinrichtung hinaus in die Ebene der Laderaumöffnung gefördertes Stückgut quer zur Flugzeuglängsachse durch die Laderaumöffnung hinauf weg förderbar ist.

Die Zwischenfördereinrichtung weist wenigstens ein in Förderrichtung längenveränderbares erstes Förderorgan, vorzugsweise ein Förderband, auf. Dieses nimmt beim Beladen Stückgut im Bereich der Laderaumöffnung vom flugzeugseitigen Ende des äußeren Förderorgans entgegen und fördert dieses quer zur Flugzeuglängsachse weiter, wobei sich an dessen flugzeugrumpfinneren Ende ein weiteres Förderorgan, vorzugsweise ein Förderband anschließt, welches das Stückgut im ersten Förderorgan entgegennimmt und in Flugzeuglängsrichtung zum vorderen Ende der im Laderaum vorhandenen Transporteinrichtung befördert. Damit wird in vorteilhafter Weise das Entgegennehmen von Stückgut im Bereich der Laderaumöffnung und dessen Weitertransport 90° um die Ecke auf engstem Raum, und zugleich optimal an die jeweilige Breite unterschiedlicher Flugzeugtypen angepaßt, sichergestellt.

Das zweite Förderorgan der Zwischenfördereinrichtung ist relativ zum ersten Förderorgan derselben verschieblich gelagert, vorzugsweise quer zur Flugzeuglängsachse. Damit wird in vorteilhafter Weise der Operationsradius des zweiten Förderorgans der Zwischenfördereinrichtung wesentlich erweitert.

Damit kann erstmals in vorteilhafter Weise auf den Einsatz menschlicher Arbeitskraft im Laderaum beim Be- und Entladen von Stückgut vollständig verzichtet werden. Auf diese Weise werden nicht nur die damit verbundenen Personalkosten eingespart und somit Betriebskosten gesenkt, sondern zugleich das Beschädigungsrisiko der Struktur im Laderaum gegen Null reduziert. Mit der Reduzierung des Beschädigungsrisikos wird in vorteilhafter Weise zugleich das Risiko der Nutzungsausfallzeit für Reparaturen solcher Beschädigungen und damit die enorm hohen Reparaturkosten im Prinzip auf Null herunter gefahren. Ferner bietet das erfindungsgemäße System den Vorteil, daß es den Laderaum automatisch be- und entlädt und zu jeder Tages- und Nachtzeit die vom Betreiber gewünschten Mindestdurchsatzraten von wenigstens 5 Tonnen innerhalb etwa 10 Minuten ausfallsicher auch bei Streiks oder ähnlichen Ereignissen garantiert. Weiterhin wird durch das erfindungsgemäße System erstmals bei einer automatischen Be- und Entladung des Laderaums eine optimale Ausnutzung der verfügbaren Laderaumfläche als auch des verfügbaren Laderaumvolumens ermöglicht, da in einer bevorzugten Ausführungsform das erfindungsgemäße System mit geeigneten Sensoren, Kameras, Regelkreisen und/oder künstlicher Intelligenz ausgestaltet werden kann, so daß das Stückgut nicht nur automatisch sondern gezielt dort im Laderaum abgelegt bzw. verstaut werden kann, wo beispielsweise noch Lücken frei sind.

Des weiteren kann das erfindungsgemäße System in vorteilhafter Weise so ausgestaltet werden, daß es dauerhaft im Laderaum des Flugzeugs montiert ist. Hierbei kann in vorteilhafter Weise auf die von Flugzeugtyp zu Flugzeugtyp unterschiedlichen Randbedingungen, wie beispielsweise örtliche Verfügbarkeit von zur Aufnahme und Ableitung von Kräften vorgesehener Lastaufnahmepunkte in der Struktur, räumliche Abmaße des Laderaums, geometrische Ausgestaltung des Laderaums, Lage der Laderaumöffnung relativ zum Laderaum, etc., angepaßt werden. Bei einem auf diese Weise an die örtlichen Gegebenheiten eines bestimmten Flugzeugtyps angepaßten erfindungsgemäßen System zum Be- und Entladen des Laderaums ist eine unbeabsichtigte Verletzung der Flugzeugstruktur im Bereich des Laderaums und insbesondere im Bereich der Laderaumöffnung vollständig ausgeschlossen, da durch die Befestigung der Zwischenfördereinrichtung im Laderaum selbige während deren Einsatz nicht durch die Laderaumöffnung hindurch in den Laderaum verbracht werden muß, so daß die dabei zu befürchtenden Beschädigungen definitiv ausbleiben.

Hierzu kann das erstmalig vorgeschlagene System und insbesondere die hierfür vorgesehene Zwischenfördereinrichtung beispielsweise aus besonders leichten Materialien, wie zwischenzeitlich verfügbares hochfestes Aluminium, Kohlefaserverbundwerkstoffen oder Composites hergestellt werden. Bei Verwendung entsprechend steifer Profile aus solchen Materialien ist ein derart zufriedenstellend geringes Gesamtgewicht der Zwischenfördereinrichtung realisierbar, daß ein Verbleib der Zwischenfördereinrichtung im Laderaum des Flugzeugs hinsichtlich dessen maximal verfügbarer Transportkapazität nicht negativ ins Gewicht fällt. Derlei biegesteife und zugleich extrem leichte Profile bieten nicht nur den Vorteil eines insgesamt besonders geringen Gewichts der Zwischenfördereinrichtung, sie ermöglichen zudem die Herstellung einer Zwischenfördereinrichtung, die problemlos den hohen Belastungen im alltäglichen Betrieb gewachsen ist, wie beispielsweise mit Blick auf das teilweise hohe Gewicht von damit zu förderndem Stückgut oder mit Blick auf die hohen Lastspitzen bei großen Maßendurchsätzen an Stückgut für ein besonders schnelles Be- und/oder Entladen.

Bei einer ebenfalls bevorzugten Variante des erfindungsgemäßen Systems kann die Zwischenfördereinrichtung mechanisch mit dem auf dem Rollfeld verfahrbaren Förderorgan verbunden werden. Dabei kann das auf dem Rollfeld verfahrbare Förderorgan an dessen der Laderaumöffnung zugewandten Ende um die Zwischenfördereinrichtung im wesentlichen geradlinig verlängert werden. Dies bietet den Vorteil, daß weniger auf das Gewicht zu achten ist, und die Zwischeneinrichtung damit materialtechnisch preiswerter und dennoch ausreichend fest bzw. belastbar ausgestaltet werden kann. Bei dieser bevorzugten Kombination ist eine Beschädigung des direkten Bereichs um die Laderaumöffnung nicht gänzlich auszuschließen, da die Zwischenfördereinrichtung quer zur Flugzeuglängsrichtung durch die Laderaumöffnung eingebracht und positioniert werden muß. Bei entsprechend verständiger Arbeitsweise ist dieses Beschädigungsrisiko jedoch unbeachtlich. Zudem ist eine Beschädigung des Laderaums als solchem bzw. der diesen ausbildenden Struktur auf jeden Fall auszuschließen.

Mit dem erfindungsgemäßen System und insbesondere mit der hierfür vorgesehenen Zwischenfördereinrichtung kann die Zeit für das Be- und Entladen eines Flugzeugs verkürzt und somit die Betriebskosten gesenkt werden.

Ferner können bei dem erfindungsgemäßen System die beim Be- und Entladen bewegten Stückgüter auf der Transporteinrichtung im Laderaum beim Beladen gezielt abgelegt und beim Entladen von dort gezielt aufgenommen bzw. weg gefördert werden. Dies bietet den großen Vorteil, daß der verfügbare Laderaum und insbesondere dort freie Flächen optimal mit Ladegut, Stückgut, Gepäckstücke oder dgl. belegt werden kann. Insbesondere bei einer Automatisierung vermittels entsprechender Sensoren, Kameras, Regelkreisen, künstlicher Intelligenz oder dgl. kann der Beladungszustand des Laderaums permanent überwacht und das System entsprechend darauf abgestellt werden.

Hierfür ist in einer weiter bevorzugten Ausführungsform vorgesehen, daß über dem Boden des Laderaums horizontal zwischen der Zwischenfördereinrichtung und dem Boden des Laderaums im Bereich der Laderaumöffnung eine den Boden des Laderaums als auch den bodenseitigen Bereich der Laderaumöffnung flächig abdeckende Schale angeordnet ist. Diese Schale, insbesondere Auffangschale, bietet zugleich den Vorteil, daß auch bei bis in den unteren Bereich des Rumpfes hinein gezogenen Laderaumöffnungen die volle Breite des Laderaums mit Stückgut beladen werden kann, ohne das die Gefahr besteht, daß Stückgut bei einem nie gänzlich auszuschließenden "über Eck Abrutschen" von dem der Laderaumöffnung zugewandten Ende des äußeren Förderorgans herunter und zwischen dem Förderorgan und der Laderaumöffnung hindurch im schlimmsten Fall bis zum Rollfeld hinunter fällt.

Vorteilhafte Weiterbildungen der Erfindung ergeben sich aus den Merkmalen der Unteransprüche.

In einer weiter bevorzugten Ausführungsform ist die Schale, insbesondere Auffangschale, die auch als "Door Way Unit" (kurz: DWU) bezeichnet wird, entlang einer Linie parallel zur Flugzeuglängsachse um- oder einklappbar. Damit wird in weiter vorteilhafter Weise sichergestellt, daß nach einem Be- oder Entladevorgang jener Abschnitt dieser Schale bzw. DWU, welcher der Laderaumöffnung benachbart ist, aus dem Nahbereich der Laderaumöffnung heraus ins Innere des Laderaums zur Mitte hin umgeklappt werden kann, so daß danach die Laderaumöffnung vollständig frei gegeben und mit der Laderaumtüre verschließbar ist.

Gemäß einer weiter bevorzugten Ausführungsform ist vorgesehen, daß die Transporteinrichtung im Laderaum ein Transportteppich ist. Dies bietet neben dem Vorteil einer kontinuierlichen, diskontinuierlichen oder taktweisen Förderung des Stückgutes ins Innere des Laderaums hinein zudem ein wesentliches Platzsparpotential, da ein solcher Transportteppich eine besonders geringe Bauhöhe aufweist und damit wenig Staukapazität des Laderaums für den Einbau einer z.B. als Transportteppich ausgebildeten Transporteinrichtung verloren geht.

Entsprechend einer weiter bevorzugten Ausführungsform des erfindungsgemäßen Systems nimmt das zweite Förderorgan beim Entladen Stückgut vom vorderen Ende der im Laderaum vorhandenen Transporteinrichtung auf und fördert dies in Flugzeuglängsrichtung weg und übergibt es an das erste Förderorgan, welches das Stückgut quer zur Flugzeuglängsachse zur Laderaumöffnung fördert und an das äußere Förderorgan zur Weiterförderung übergibt. Damit wird in vorteilhafter Weise auch ein Entladen des Stückguts mit einer Bewegung desselben 90° um die Ecke aus dem Laderaums heraus in den Nahbereich der Laderaumöffnung hinein garantiert.

Gemäß einer weiter bevorzugten Ausführungsform des Systems verfügt das flugzeugrumpfinnere Ende des ersten Förderorgans der Zwischenfördereinrichtung über eine Schulter, die an einer im Gepäckladeraum senkrecht orientierten ersten Schiene längs derselben vertikal verschieblich angelenkt ist. Damit kann in vorteilhafter Weise eine Höhenverstellung des Endpunktes des ersten Förderorgans realisiert werden. Somit ist sichergestellt, daß Stückgut über die volle Höhe des Laderaums gestapelt werden kann.

Entsprechend einer weiter bevorzugten Ausführungsform des Systems ist vorgesehen, daß die senkrecht orientierte erste Schiene ihrerseits von wenigstens einer an der Decke oder im Boden befestigten waagerecht orientierten zweiten Schiene geführt ist. Damit kann eine Verschiebung des Anlenkpunktes quer zur Flugzeuglängsachse über die Breite des Flugzeugrumpfes sichergestellt werden. Somit ist in vorteilhafter Weise garantiert, daß Stückgut nicht nur über die gesamte Höhe an einem Punkt des Laderaums sondern über dessen gesamte Breite und aufgrund der in die Tiefe fördernden Transporteinrichtung auch über dessen gesamte Tiefe und damit über dessen gesamtes Volumen gestapelt bzw. hinein transportiert und beim Entladen natürlich wieder herausgeholt werden kann.

Das zweite Förderorgan ist in Flugzeuglängsrichtung längenveränderbar. Auf diese Weise kann der Operationsradius der Zwischenfördereinrichtung ebenfalls vorteilhaft vergrößert werden. Insbesondere ist damit sichergestellt, daß bei besonders breiten Laderaumöfmungen im Vergleich zu einer relativ schmalen Zwischenfördereinrichtung Stückgut dennoch in Flugzeuglängsrichtung bis zum vorderen Ende der im Laderaum befindlichen Transporteinrichtung gefördert und an diese übergeben wird.

In einer weiter bevorzugten Ausführungsform des Systems ist das zweite Förderorgan als ein in Flugzeuglängsrichtung beweglicher Schieber ausgebildet. Dies bietet eine kostengünstige Alternative zur Ausgestaltungsvariante in Form eines Förderbandes. Darüber hinaus läßt sich die Ansteuerung und Funktionsweise eines längsbeweglichen Schiebers mit entsprechenden Stellgliedern bzw. Endschaltern einfacher ausbilden. Dem gegenüber bietet die Ausgestaltungsform eines Förderbandes den Vorteil des geringen Verschleißes und der höheren Durchsatzraten.

Gemäß einer weiter bevorzugten Ausführungsform des Systems ist das zweite Förderorgan als eine schräg anstellbare Gleitfläche ausgebildet. Dies ist im Prinzip die einfachste Variante, wie Stückgut quer zur Hauptförderrichtung des ersten Förderorgans der Zwischenfördereinrichtung, also in Längsrichtung in den Laderaum hinein durch sanftes Abgleiten transportiert werden kann.

Einer weiter bevorzugten Ausführungsform des Systems zufolge verfügt das Förderorgan zum Entladen über einen Greifer zum Erfassen von Stückgut. Dieser Greifer kann so ausgebildet sein, daß er mit dem Erfassen eines Stückgutes an dessen Griff zupackt, dieses auf das zweite Förderorgan der Zwischenförderorgan zieht und von diesem weg transportieren läßt. Dieser Greifer kann in einer besonders bevorzugten Ausführungsform mit Sensoren, Kameras, Regelkreisen und/oder künstlicher Intelligenz ausgestattet sein, so daß gezielt bestimmte Gepäckstücke bzw. Stückgüter aus dem Laderaum heraus ausgewählt und ergriffen werden können.

Einer weiter bevorzugten Ausführungsform des Systems zufolge ist das zweite Förderorgan der Zwischenfördereinrichtung ein Förderband, das über einer darunter angeordneten steifen Gleitplatte verläuft, wobei die Gleitplatte mit dem Förderband zwischen zwei Stückgüter einschiebbar ist und wobei das obere Stückgut mit dem Förderband wegförderbar ist. Damit kann eine kostengünstige Variante zum möglichst effizienten Entladen des Laderaums bereitgestellt werden.

Die Erfindung wird nachfolgend in Ausführungsbeispielen anhand der Figuren der Zeichnung näher erläutert. Es zeigt:
- Fig. 1: einen schematisch vereinfachten Schnitt als auch eine schematisch vereinfachte Draufsicht eines Laderaums in einem Flugzeug mit einer darin angeordneten beispielhaften Ausführungsform einer erfindungsgemäßen Zwischenfördereinrichtung beim Beladen, die am Rollfeld-Förderorgan angelenkt ist;
- Fig. 2: einen schematisch vereinfachten Schnitt als auch eine schematisch vereinfachte Draufsicht der in Fig. 1 gezeigten Zwischenfördereinrichtung, die am Rollfeld-Förderorgan angelenkt ist, mit einer zweiten Variante des zweiten Förderorgans beim Beladen mit teilweise ausgefahrenem zweiten Förderorgan;
- Fig. 3: einen schematisch vereinfachten Schnitt als auch eine schematisch vereinfachte Draufsicht der in Fig. 1 und 2 gezeigten Zwischenfördereinrichtung beim Beladen mit bei der in Fig.1 gezeigten ersten Variante des zweiten Förderorgans in dessen Längsrichtung verlängter Länge;
- Fig. 4: einen schematisch vereinfachten Schnitt als auch eine schematisch vereinfachte Draufsicht einer zweiten Variante einer Zwischenfördereinrichtung beim Beladen mit einem einen Schieber aufweisenden zweiten Förderorgan;
- Fig. 5: einen schematisch vereinfachten Schnitt als auch eine schematisch vereinfachte Draufsicht einer in Fig. 1 bis 3 gezeigten Zwischenfördereinrichtung beim Beladen mit darunter angeordneter Auffangschale (kurz: DWU);
- Fig. 6: einen schematisch vereinfachten Schnitt als auch eine schematisch vereinfachte Draufsicht der in Fig. 2 gezeigten zweiten Variante einer Zwischenfördereinrichtung beim Beladen mit darunter angeordneter Auffangschale (kurz: DWU);
- Fig. 7: einen schematisch vereinfachten Schnitt als auch eine schematisch vereinfachte Draufsicht der in Fig. 2 gezeigten zweiten Variante einer in Fig. 1 gezeigten Zwischenfördereinrichtung beim Entladen ohne darunter angeordneter Auffangschale (kurz: DWU);
- Fig. 8: einen schematisch vereinfachten Schnitt als auch eine schematisch vereinfachte Draufsicht einer sechste Variante einer Zwischenfördereinrichtung beim Entladen mit darunter angeordneter Auffangschale (kurz: DWU).

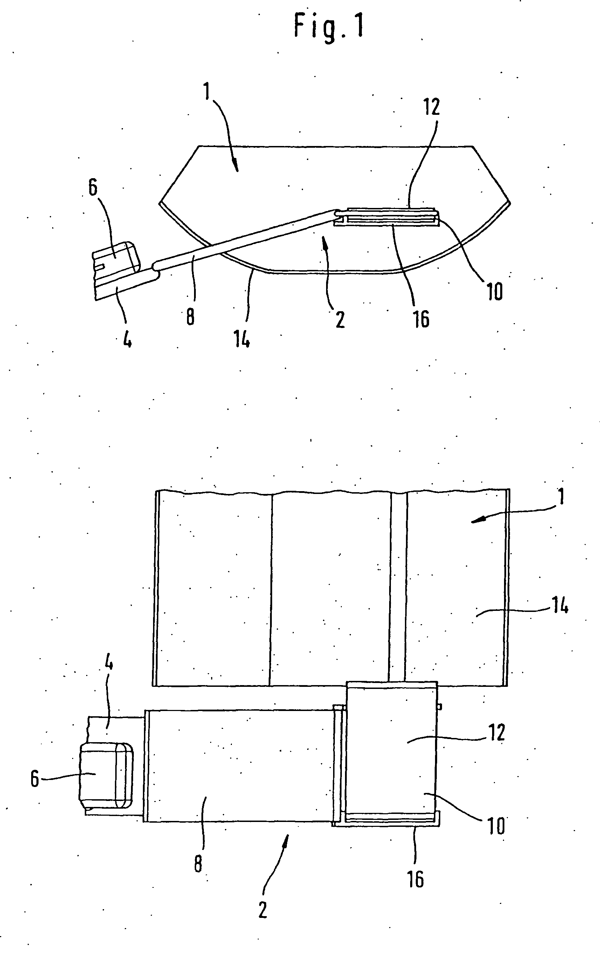

In Fig. 1 ist in einem schematisch vereinfachten Schnitt als auch in einer schematisch vereinfachten Draufsicht ein Laderaum 1 eines nicht näher dargestellten Flugzeuges mit einer darin angeordneten ersten beispielhaften Ausführungsform einer erfindungsgemäßen Zwischenfördereinrichtung 2 beim Beladen gezeigt. Die Zwischenfördereinrichtung 2 ist an einem Rollfeld-Förderorgan 4, das nur zum Teil angeschnitten dargestellt ist und ein angeschnittenes Stückgut 6 fördert, angelenkt. Das Rollfeld-Förderorgan, kann wie vorstehend diskutiert, auf dem Rollfeld verfahren werden.

Die Zwischenfördereinrichtung 2 weist in Fig. 1 ein erstes Förderorgan 8 auf, das vom Rollfeld-Förderorgan 4 durch die Laderaumöffnung hindurch bis in den Laderaum 1 hinein reicht, wobei das erste Förderorgan 8 hier beispielsweise als Förderband ausgebildet ist, sowie ein zweites Förderorgan 10. Das zweite Förderorgan 10 verfügt über einen beispielsweise als Förderband ausgebildeten, in dessen Längsrichtung und damit in Längsrichtung des Flugzeuges längenveränderbaren Förderabschnitt 12, der bei dieser Darstellung bis zum, der hier nicht näher dargestellten Laderaumöffnung zugewandten, vorderen Ende einer den nicht näher dargestellten Boden des Laderaumes 1 auskleidenden Transporteinrichtung 14 reicht, wobei die Transporteinrichtung 14 beispielsweise als Transportteppich ausgebildet sein kann.

Das zweite Förderorgan 10 ist am ersten Förderorgan 8 angelenkt und kann gegenüber diesem verschwenkt werden. Das zweite Förderorgan 10 verfügt über eine gestell- oder rahmenartige Struktur 16, vermittels der der längenveränderliche Förderabschnitt 12 abgestützt ist. Das Stückgut 6 wird vom Rollfeld-Förderorgan 4 zum ersten Förderorgan 8 der Zwischenfördereinrichtung 2 transportiert und von dort zum zweiten Förderorgan 10 weitertransportiert, so daß es quer zur Flugzeuglängsachse weiter in den Laderaum 1 hineingelangt und dann in Längsrichtung des Laderaumes 1 vom zweiten Förderorgan 10 zur Transporteinrichtung 14 übergeben werden kann, so daß es von dort aus weiter in die Tiefe des Laderaumes 1 transportierbar ist.

Im weiteren Verlauf der Figurenbeschreibung werden gleich- oder ähnlich wirkende Teile bzw. Elemente mit denselben Bezugszeichen wie in der ersten Ausführungsform versehen.

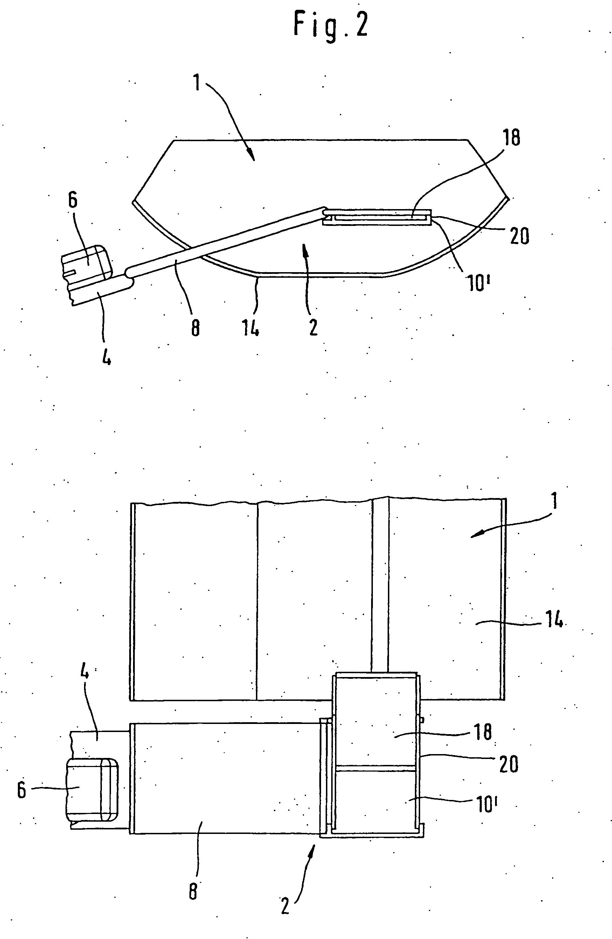

In Fig. 2 ist in einem schematisch vereinfachten Schnitt als auch in einer schematisch vereinfachten Draufsicht die in Fig. 1 gezeigte Zwischenfördereinrichtung 2 mit einer zweiten Variante des zweiten Förderorgans 10' beim Beladen mit teilweise ausgefahrenem zweiten Förderorgan 10' dargestellt. Das zweite Förderorgan 10' weist eine in Längsrichtung des Förderorgans 10' verschiebliche Platte 18 auf, die in einer schienenartigen Führungsstruktur 20 geführt ist und bei der hier gezeigten Darstellung soweit in Flugzeuglängsrichtung ausgefahren ist, daß sie bis über das vordere Ende der bodenseitigen Transporteinrichtung 14 reicht. Damit ist sichergestellt, daß Stückgut 6 von der Zwischenfördereinrichtung 2 lückenlos an die Transporteinrichtung 14 übergeben werden kann.

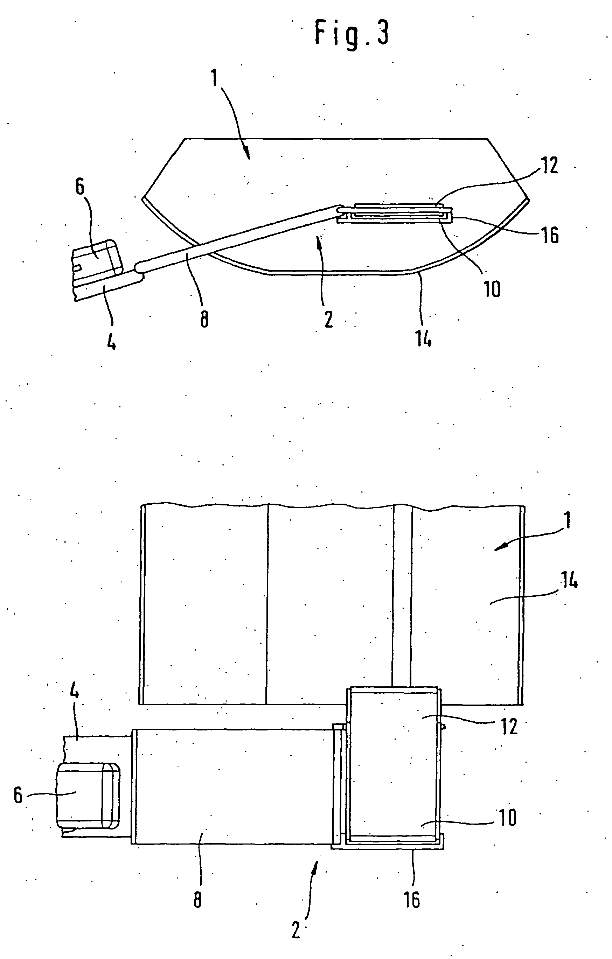

In Fig. 3 ist in einem schematisch vereinfachten Schnitt als auch in einer schematisch vereinfachten Draufsicht die in Fig. 1 und 2 gezeigte Zwischenfördereinrichtung 2 mit der bereits in Fig. 1 gezeigten ersten Variante des zweiten Förderorgans 10 dargestellt. Das zweite Förderorgan 10 weist eine in dessen Längsrichtung vergrößerte Länge des Förderabschnittes 12 auf, so daß dessen, in den Laderaum 1 in Längsrichtung hineinragendes Ende weiter über die Transporteinrichtung 14 ragt, wie in Fig. 1 veranschaulicht. Auch auf diese Weise kann sichergestellt werden, daß Stückgut von der Zwischenfördereinrichtung 2 zweifelsfrei bis zur Transporteinrichtung 14 gelangt.

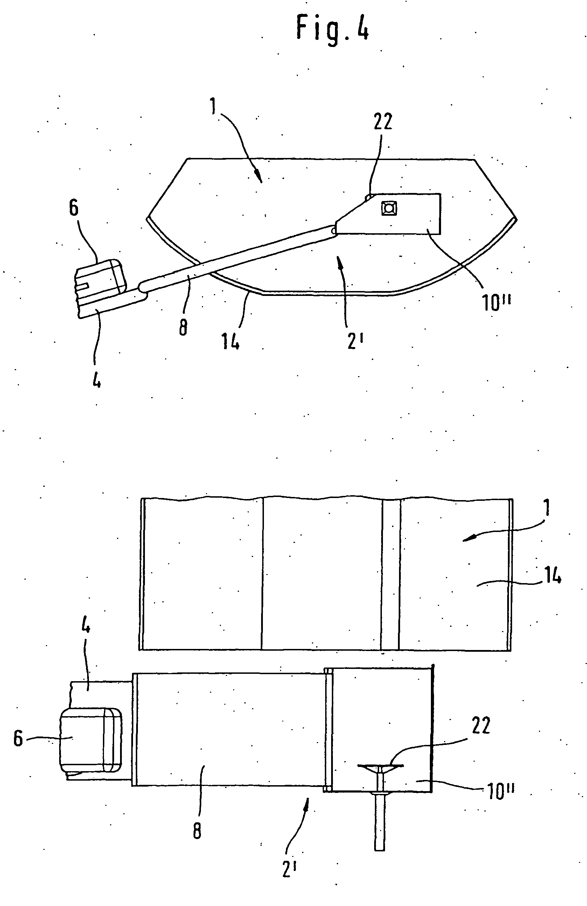

In Fig. 4 ist in einem schematisch vereinfachten Schnitt und in einer schematisch vereinfachten Draufsicht eine zweite Variante einer Zwischenfördereinrichtung 2' beim Beladen gezeigt. Die zweite Variante der Zwischenfördereinrichtung 2' verfügt über eine weitere Variante des zweiten Förderorgans 10", das seinerseits einen Schieber 22 aufweist. Vermittels des Schiebers 22 wird Stückgut 6 in Längsrichtung des Flugzeuges in den Laderaum 1 hinein auf die dortige Transporteinrichtung 14 geschoben.

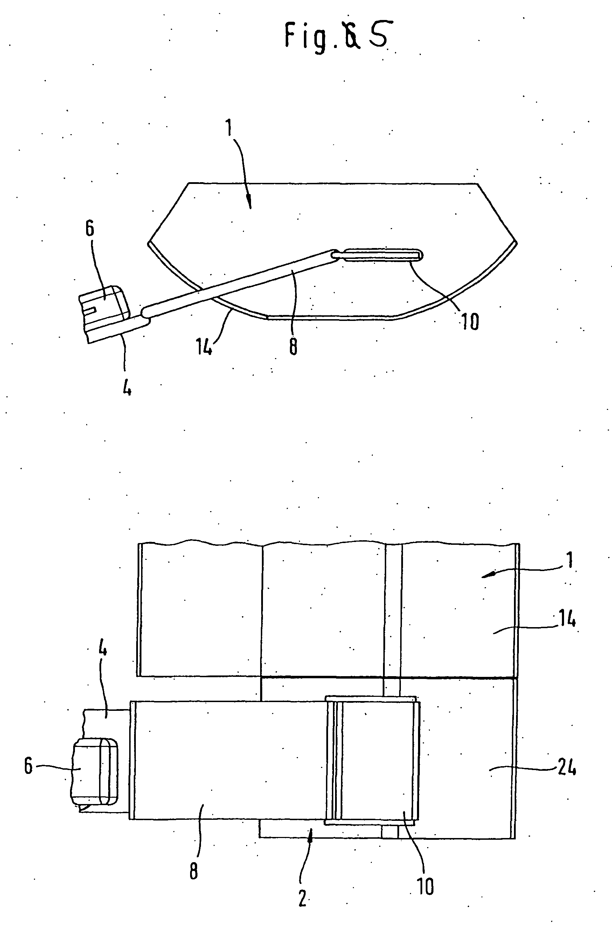

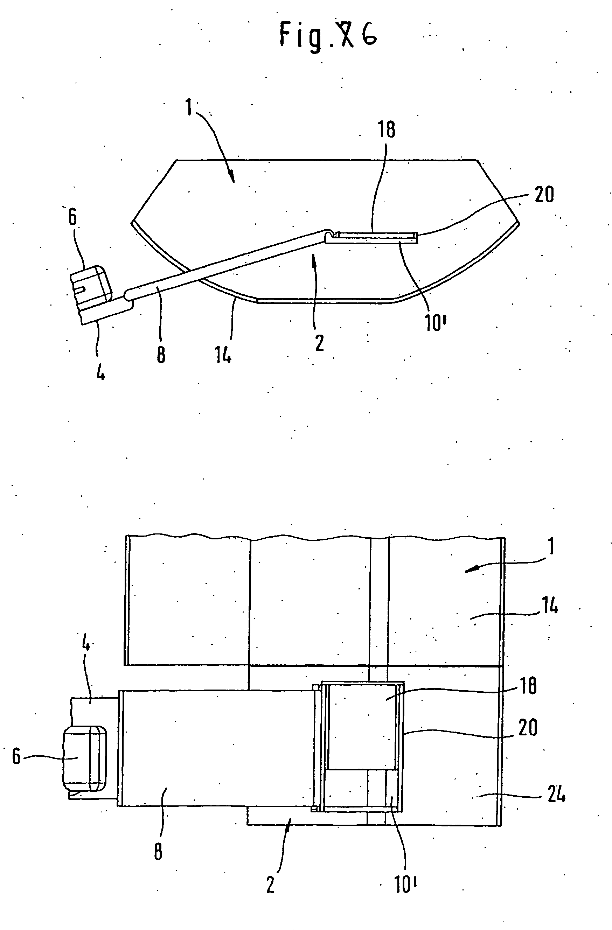

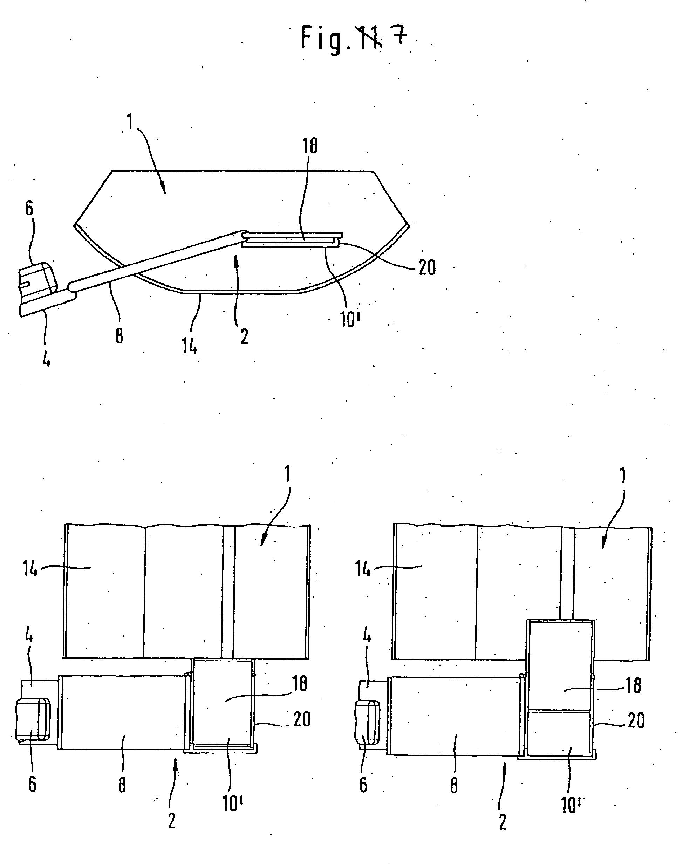

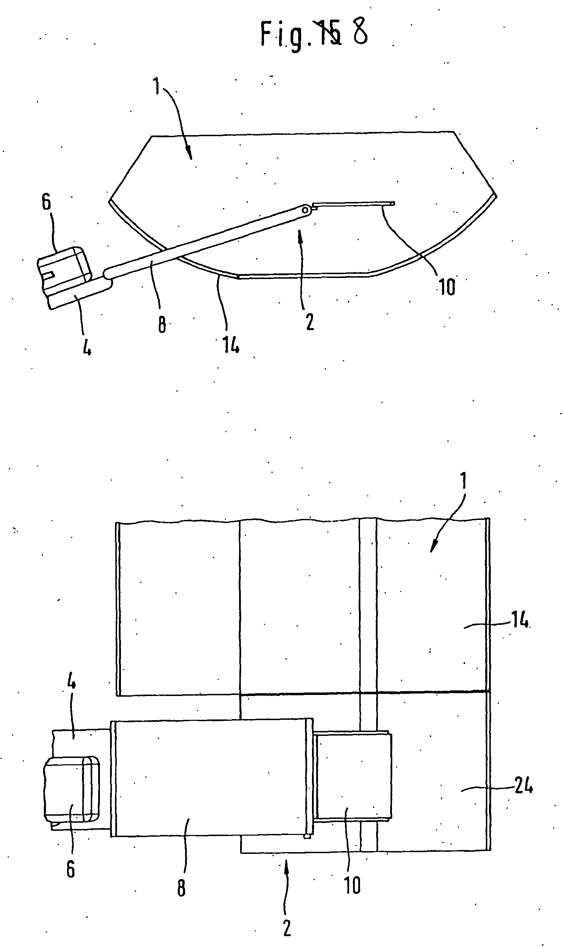

In Fig. 1 bis 4 wird der dort gezeigte Beladevorgang ohne eine im näheren Umfeld der nicht näher dargestellten Laderaumöffnung angeordneten Auffangschale durchgeführt. Diese Auffangschale wird eingedeutscht häufig auch als "Door-Way-Unit" (kurz: DWU) bezeichnet. Eine Variante einer solchen Auffangschale ist in den Fig. 6 bis 9 und Fig. 13 bis 16 gezeigt und ist dort mit der Bezugsziffer 24 versehen.

Dabei ist in Fig. 5 in einem schematisch vereinfachten Schnitt als auch einer schematisch vereinfachten Draufsicht die bereits in Fig. 3 gezeigte Zwischenfördereinrichtung 2 beim Beladen mit darunter angeordneter Auffangschale 24 (kurz: DWU) veranschaulicht. Dabei grenzt die DWU 24 an die Transporteinrichtung 14 an und sichert den Raum im Nahbereich der hier nicht näher dargestellten Laderaumöffnung unter der Zwischenfördereinrichtung 2 ab, so daß eventuell von der Zwischenfördereinrichtung 2 versehentlich herunterrutschendes Stückgut 6 aufgefangen und an die Transporteinrichtung 14 übergeben wird.

In Fig. 6 ist in einem schematisch vereinfachten Schnitt als auch in einer schematisch vereinfachten Draufsicht die bereits in Fig. 2 gezeigte zweite Variante einer Zwischenfördereinrichtung 2 mit der dort bereits dargestellten Variante des zweiten Förderorgans 10' beim Beladen mit darunter angeordneter Auffangschale 24 dargestellt.

Wie bereits vorstehend erwähnt, sind nachfolgend ähnlich wirkende Teile bzw. Elemente der weiter diskutierten Varianten mit gleichen Bezugszeichen wie in den vorausgegangenen Figuren versehen.

Die in Fig. 7 veranschaulichten Entladevorgänge sind ohne Auffangschale (kurz: DWU) dargestellt.

In Fig. 7 ist in einem schematisch vereinfachten Schnitt als auch einer schematisch vereinfachten Draufsicht die in Fig. 2 beim Beladen gezeigte zweite Variante einer in Fig. 1 gezeigten Zwischenfördereinrichtung 2 mit dem zweiten Förderorgan 10' gezeigt, hier jedoch beim Entladen ohne darunter angeordneter DWU. Das zweite Förderorgan 10' weist hierbei ein Förderband auf, das über einer darunter angeordneten steifen Gleitplatte 18 verläuft, wobei die Platte 18 mit dem Förderband zwischen zwei Stückgüter 6 einschiebbar ist und wobei das obere Stückgut mit dem Förderband wegförderbar ist. Zum Entladen sticht die Platte 18 einem Spatel gleich in Längsrichtung in übereinander liegende Stückgüter am vorderen Ende der Transporteinrichtung 14 hinein, zieht mit dem Förderband ein Stückgut auf sich hinauf und nimmt es bei der Rückwärtsbewegung des Förderbands mit sich mit, um es dann an das erste Förderorgan 8 zu übergeben, so daß es von dort zum Rollfeld-Förderorgan 4 zum weiteren Entladen transportiert werden kann.

In Fig. 8 ist in einem schematisch vereinfachten Schnitt als auch einer schematisch vereinfachten Draufsicht eine weitere Variante einer Zwischenfördereinrichtung 2 beim Entladen mit darunter angeordneter Auffangschale 24 gezeigt. Diese weitere Variante der Zwischenfördereinrichtung 2 weist ein zweites Förderorgan 10 auf, das als dünne Platte ausgebildet ist. Die Platte 10 ist in deren Längsrichtung parallel zur Längsrichtung des Flugzeuges verschieblich zur Stirnseite des ersten Förderorgans 8 gelagert und hier in einer mittleren Position gezeigt. Die Gleitplatte 10 kann mit einem darüber angeordneten bzw. gleitenden Förderband zwischen zwei Stückgüter eingeführt werden, wobei dann durch die Förderbewegung des Förderbandes das obere Stückgut mit dem Förderband aufgenommen und von diesem wegtransportiert wird.

## Patentansprüche

1. System zum Be- und Entladen von Stückgut (6) in einem Laderaum (1) eines Flugzeugs, mit
einer den Boden des Laderaumes (1) flächig abdeckenden Transporteinrichtung (14) zur, insbesondere taktweisen, Förderung des Stückgutes (6) in Richtung auf das innere Ende des Laderaumes (1) beim Beladen bzw. von diesem weg beim Entladen, wobei die Transporteinrichtung (14) mit deren vorderem Ende bis in den Bereich der Laderaumöffnung im Flugzeugrumpf reicht, und mit
einem an der Außenseite des Flugzeuges an die Laderaumöffnung anschließenden Förderorgan (4) zum Transport des Stückgutes zwischen der Rollfeldebene und der Laderaumöffnung, wobei
zwischen dem flugzeugseitigen Ende des äußeren Förderorgans (4) und dem vorderen Ende der Transporteinrichtung (14) im Laderaum (1) wenigstens eine Zwischenfördereinrichtung (2, 2', 2", 2"', 2"") angeordnet ist, mit der das Stückgut (6) beim Beladen zunächst in Querrichtung zur Flugzeuglängsachse tiefer in den Flugzeugrumpf hinein förderbar ist und sodann in Flugzeuglängsrichtung förderbar und auf dem vorderen Ende der Transporteinrichtung (14) im Laderaum (1) ablegbar ist, und mit der beim Entladen über das vordere Ende der Transporteinrichtung (14) hinaus in die Ebene der Laderaumöffnung gefördertes Stückgut (6) quer zur Flugzeuglängsachse durch die Laderaumöffnung hindurch weg förderbar ist,
**dadurch gekennzeichnet, daß**
die Zwischenfördereinrichtung (2, 2', 2", 2"', 2"") wenigstens ein in Förderrichtung längenveränderbares erstes Förderorgan (8) aufweist, das beim Beladen Stückgut (6) im Bereich der Laderaumöffnung vom flugzeugseitigen Ende des äußeren Förderorgans (4) entgegennimmt und quer zur Flugzeuglängsachse weiterfördert, wobei sich an dessen flugzeugrumpfinneren Ende ein weiteres Förderorgan (10, 10`, 10", 10"', 10"") anschließt, welches das Stückgut (6) vom ersten Förderorgan (8) entgegennimmt und in Flugzeuglängsrichtung zum vorderen Ende der im Laderaum (1) vorhandenen Transporteinrichtung (14) fördert, und daß
das zweite Förderorgan (10, 10', 10", 10"', 10"") der Zwischenfördereinrichtung (2, 2', 2", 2"', 2"") in Flugzeuglängsrichtung längenveränderbar und relativ zum ersten Förderorgan (8) derselben verschieblich gelagert ist, wobei mittels der Zwischenfördereinrichtung (2, 2', 2", 2"', 2"") das Stückgut (6) beim Beladen gezielt auf der Transporteinrichtung (14) im Laderaum (1) ablegbar und beim Entladen von dort gezielt wegförderbar ist.

2. System nach Anspruch 1, **dadurch gekennzeichnet, daß** das erste Förderorgan (8) und/oder das zweite Förderorgan (10, 10', 10", 10"', 10"") ein Förderband ist, und/oder daß das zweite Förderorgan (10, 10', 10", 10"', 10"") quer zur Flugzeuglängsachse verschieblich gelagert ist.

3. System nach Anspruch 1 oder 2, **dadurch gekennzeichnet, daß** über dem Boden des Laderaums (1) horizontal zwischen der Zwischenfördereinrichtung (2, 2', 2", 2"', 2"") und dem Boden des Laderaums (1) im Bereich der Laderaumöffnung eine den Boden des Laderaums (1) als auch den bodenseitigen Bereich der Laderaumöffnung flächig abdeckende Schale (24) angeordnet ist.

4. System nach Anspruch 3, **dadurch gekennzeichnet, daß** die Schale (24) entlang einer Linie parallel zur Längsachse des Flugzeugs umklappbar ist.

5. System nach einem der Ansprüche 1 bis 4, **dadurch gekennzeichnet, daß** die Transporteinrichtung (14) im Laderaum (1) ein Transportteppich ist.

6. System nach einem der Ansprüche 1 bis 5, **dadurch gekennzeichnet, daß** das zweite Förderorgan (10, 10', 10", 10''', 10'''') beim Entladen Stückgut (6) vom vorderen Ende der im Laderaum (1) vorhandenen Transporteinrichtung (14) aufnimmt und in Flugzeuglängsrichtung weg fördert und an das erste Förderorgan (8) übergibt, welches das Stückgut (6) quer zur Flugzeuglängsachse zur Laderaumöffnung fördert und an das äußere Förderorgan (4) zur Weiterförderung übergibt.

7. System nach einem der Ansprüche 1 bis 6, **dadurch gekennzeichnet, daß** das flugzeugrumpfinnere Ende des ersten Förderorgans (8) der Zwischenfördereinrichtung (2, 2', 2", 2"', 2"") über eine Schulter an einer im Gepäckladeraum (1) senkrecht orientierten ersten Schiene längs derselben vertikal verschieblich angelenkt ist, zur Höhenverstellung im Gepäckladeraum.

8. System nach Anspruch 7, **dadurch gekennzeichnet, daß** die senkrecht orientierte erste Schiene ihrerseits von wenigstens einer an der Decke oder dem Boden befestigten waagerecht orientierten zweiten Schiene geführt ist, zur Verschiebung des Anlenkpunktes quer zur Flugzeuglängsachse.

9. System nach einem der Ansprüche 1 bis 8, **dadurch gekennzeichnet, daß** das zweite Förderorgan (10, 10', 10", 10"', 10"") einen in Flugzeuglängsrichtung beweglichen Schieber (22) aufweist.

10. System nach einem der Ansprüche 1 bis 9, **dadurch gekennzeichnet, daß** das zweite Förderorgan (10, 10', 10", 10"', 10"") eine schräg anstellbare Gleitfläche (28) aufweist.

11. System nach einem der Ansprüche 1 bis 10, **dadurch gekennzeichnet, daß** die Zwischenfördereinrichtung (2, 2', 2", 2"', 2"") oder das zweite Förderorgan (10, 10', 10", 10'", 10"") zum Entladen einen Greifer (32, 36) zum Erfassen von Stückgut (6) aufweist.

12. System nach einem der Ansprüche 1 bis 11, **dadurch gekennzeichnet, daß** das zweite Förderorgan (10, 10', 10", 10"', 10"") der Zwischenfördereinrichtung (2, 2', 2", 2"', 2" ") ein Förderband ist, das über einer darunter angeordneten steifen Gleitplatte (18) verläuft, wobei die Gleitplatte (18) mit dem Förderband zwischen zwei Stückgüter (6) einschiebbar ist und wobei das obere Stückgut mit dem Förderband (6) wegförderbar ist.

## Claims

1. A system for loading and unloading loose cargo (6) in a cargo hold (1) of a plane, comprising
transport means (14) covering the area of the floor of the cargo hold (1) for particularly intermittently conveying the loose cargo (6) towards the inner end of the cargo hold (1) during loading, and away from it during unloading, with the front end of said transport means (14) reaching into the range of the cargo hold opening inside the fuselage, and
a conveyor organ (4) connecting to the cargo hold opening on the outside of the plane for transporting the loose cargo between the level of the tarmac and the cargo hold opening, wherein
at least one intermediate conveyor means (2, 2', 2", 2"', 2"") is arranged between the plane-side end of said external conveyor organ (4) and the front end of said transport means (14) in the cargo hold (1), wherein, during loading, the loose cargo (6) may initially be conveyed deeper into the fuselage in a direction transversal to the longitudinal axis of the plane, and subsequently be conveyed in the longitudinal direction of the plane and deposited on the front end of said transport means (14) in the cargo hold (1), and wherein, during unloading, loose cargo (6) conveyed beyond the front end of said transport means (14) into the plane of the cargo hold opening may be transported off transversely to the longitudinal axis of the plane through the cargo hold opening,
**characterized in that**
said intermediate conveyor means (2, 2', 2", 2"', 2"") comprise at least one first conveyor organ (8) adapted to be modifiable in length in the conveying direction for receiving the loose cargo (6) in the range of the cargo hold opening from the plane-side end of said external conveyor organ (4) and conveying it on transversely to the longitudinal axis of the plane during loading, wherein its end inside the fuselage is followed by another conveyor organ (10, 10', 10", 10'", 10"") which receives the loose cargo (6) from said first conveyor organ (8) and conveys it in the longitudinal direction of the plane to the front end of said transport means (14) present in the cargo hold (1), and **in that**
said second conveyor organ (10, 10', 10", 10"', 10" ") of said intermediate conveyor means (2, 2', 2", 2"', 2"") is adapted to be modifiable in length in the longitudinal direction of the plane and is mounted slidably relative to said first conveyor organ (8) thereof, wherein, by means of said intermediate conveyor means (2, 2', 2", 2"', 2""), the loose cargo (6) may purposely be deposited on said transport means (14) in the cargo hold (1) during loading, and purposely transported away from there during unloading.

2. The system according to Claim 1, **characterized in that** said first conveyor organ (8) and/or said second conveyor organ (10, 10', 10", 10"', 10"") is a conveyor belt, and/or said second conveyor organ (10, 10', 10", 10"', 10"") is mounted slidably transversely to the longitudinal axis of the plane.

3. The system according to Claim 1 or 2, **characterized in that** a tray (24) covering the floor of the cargo hold (1) and also the floor-side range of the cargo hold opening is arranged in the range of the cargo hold opening above the floor of the cargo hold (1) horizontally between said intermediate conveyor means (2, 2', 2", 2"', 2"") and the floor of the cargo hold (1).

4. The system according to Claim 3, **characterized in that** said tray (24) is adapted to be folded along a line parallel to the longitudinal axis of the plane.

5. The system according to any one of Claims 1 to 4, **characterized in that** said transport means (14) in the cargo hold (1) is a transport carpet.

6. The system according to any one of claims 1 to 5, **characterized in that**, during unloading, said second conveyor organ (10, 10', 10", 10"', 10"") receives loose cargo (6) from the front end of said transport means (14) present in the cargo hold (1), transports it off in the longitudinal direction of the plane, and hands it over to said first conveyor organ (8) which conveys the loose cargo (6) transversely to the longitudinal axis of the plane to the cargo hold opening to hand it over to said external conveyor organ (4) for further transport.

7. The system according to any one of claims 1 to 6, **characterized in that** the end of said first conveyor organ (8) of said intermediate conveyor means (2, 2', 2", 2"', 2"") located inside the plane's fuselage is linked to a first rail having a vertical orientation in the luggage cargo hold (1) via a shoulder, so as to be vertically slidable along it for height adjustment in the luggage hold.

8. The system according to claim 7, **characterized in that** said vertically oriented first rail in turn is guided by at least one second rail having a horizontal orientation and being fastened on the ceiling or on the floor, for displacing the linking point transversely to the longitudinal axis of the plane.

9. The system according to any one of Claims 1 to 8, **characterized in that** said second conveyor organ (10, 10',10",10'",10"") comprises a sliding organ (22) that is movable in the longitudinal direction of the plane.

10. The system according to any one of Claims 1 to 9, **characterized in that** said second conveyor organ (10, 10', 10", 10"', 10"") comprises an obliquely inclinable sliding surface (28).

11. The system according to any one of Claims 1 to 10, **characterized in that** said intermediate conveyor means (2, 2', 2", 2"', 2"") or said second conveyor organ (10, 10', 10", 10"', 10"") comprises a gripping organ (32, 36) for grasping loose cargo (6) for unloading.

12. The system according to any one of Claims 1 to 11, **characterized in that** said second conveyor organ (10, 10', 10", 10"', 10" ") of said intermediate conveyor means (2, 2', 2", 2"', 2"") is a conveyor belt running over a rigid slide panel (18) arranged underneath it, wherein said slide panel (18) may be inserted between two cargo items (6) jointly with the conveyor belt, and wherein the upper loose cargo may be transported off by said conveyor belt (6).

## Revendications

1. Système de chargement et de déchargement d'un article (6) dans un espace de chargement (1) d'un avion, avec
Un dispositif de transport (14) recouvrant en nappe le sol de l'espace de chargement (1) destiné au transport, en particulier cadencé, de l'article (6) en direction de l'extrémité interne de l'espace de chargement (1) lors du chargement et/ou en s'éloignant de celui-ci lors du déchargement, le dispositif de transport (14) atteignant avec son extrémité avant la zone de l'ouverture de l'espace de chargement dans le fuselage, et avec
un organe de transport (4) raccordé, au niveau de la face externe de l'avion, à l'ouverture de l'espace de chargement, destiné au transport de l'article entre le plan de la piste et l'ouverture de l'espace de chargement,
au moins un dispositif de transport intermédiaire (2, 2', 2", 2''', 2"") étant disposé entre l'extrémité côté avion de l'organe de transport (4) externe et l'extrémité avant du dispositif de transport (14) dans l'espace de chargement (1), avec lequel l'article (6) peut être transporté plus profondément dans le fuselage de l'avion lors du chargement tout d'abord dans le sens transversal par rapport à l'axe longitudinal de l'avion, puis peut être transporté dans le sens longitudinal de l'avion, et peut être déposé sur l'extrémité avant du dispositif de transport (14) dans l'espace de chargement (1), et avec lequel lors du déchargement au-delà de l'extrémité avant du dispositif de transport (14), l'article transporté (6) dans le plan de l'ouverture de l'espace de chargement peut être acheminé transversalement par rapport à l'axe longitudinal de l'avion à travers l'ouverture de l'espace de chargement,
**caractérisé en ce que**
le dispositif de transport intermédiaire (2, 2', 2" , 2"', 2"") présente au moins un premier organe de transport (8) variable en longueur dans le sens de transport, lequel réceptionne, lors du chargement, l'article (6) dans la zone de l'ouverture de l'espace de chargement par l'extrémité côté avion de l'organe de transport (4) externe, et l'emporte transversalement par rapport à l'axe longitudinal de l'avion, un autre organe de transport (10, 10' , 10" , 10''', 10"") étant raccordé à l'extrémité interne au fuselage de celui-ci, lequel organe réceptionne l'article (6) du premier organe de transport (8) et le transporte dans le sens longitudinal de l'avion vers l'extrémité avant du dispositif de transport (14) existant dans l'espace de chargement (1), et **en ce que**
le deuxième organe de transport (10, 10' , 10" , 10"' , 10"") du dispositif de transport intermédiaire (2, 2', 2" , 2"', 2"") est variable en longueur dans le sens longitudinal de l'avion, et est logé de manière à pouvoir être coulissé par rapport au premier organe de transport (8) de ce même dispositif de transport, l'article (6) pouvant être déposé lors du chargement de manière ciblée sur le dispositif de transport (14) dans l'espace de chargement (1) au moyen du dispositif de transport intermédiaire (2, 2' , 2", 2"', 2""), et pouvant être emporté depuis ce lieu de manière ciblée lors du déchargement.

2. Système selon la revendication 1, **caractérisé en ce que** le premier organe de transport (8) et/ou le deuxième organe de transport (10, 10' , 10" , 10''', 10'''') est un convoyeur à bande, et/ou **en ce que** le deuxième organe de transport (10, 10' , 10" , 10"' , 10'''') est positionné de manière à coulisser transversalement par rapport à l'axe longitudinal de l'avion.

3. Système selon la revendication 1 ou 2, **caractérisé en ce que** au-dessus du sol de l'espace de chargement (1) horizontalement entre le dispositif de transport intermédiaire (2, 2', 2", 2"', 2"") et le sol de l'espace de chargement (1) dans la zone de l'ouverture de l'espace de chargement est disposée une coque (24) recouvrant en nappe non seulement le sol de l'espace de chargement (1) mais aussi la zone côté sol de l'ouverture de l'espace de chargement.

4. Système selon la revendication 3, **caractérisé en ce que** la coque (24) est rabattable le long d'une ligne parallèle à l'axe longitudinal de l'avion.

5. Système selon l'une quelconque des revendications 1 à 4, **caractérisé en ce que** le dispositif de transport (14) dans l'espace de chargement (1) est un tapis de transport.

6. Système selon l'une quelconque des revendications 1 à 5, **caractérisé en ce que** le deuxième organe de transport (10, 10' , 10" , 10"' , 10"") reçoit, lors du déchargement, l'article (6) de l'extrémité avant du dispositif de transport (14) existant dans l'espace de chargement (1), et l'emporte dans le sens longitudinal de l'avion, et le transmet au premier organe de transport (8) qui achemine l'article (6) transversalement par rapport à l'axe longitudinal de l'avion vers l'ouverture de l'espace de chargement, et le transmet à l'organe de transport (4) externe en vue de son acheminement ultérieur.

7. Système selon l'une quelconque des revendications 1 à 6, **caractérisé en ce que** l'extrémité interne de fuselage du premier organe de transport (8) du dispositif de transport intermédiaire (2, 2', 2", 2"', 2"") s'appuie par un épaulement contre un premier rail orienté perpendiculairement dans la soute à bagages (1) de manière à coulisser verticalement le long de ce rail, en vue du réglage en hauteur dans la soute à bagages.

8. Système selon la revendication 7, **caractérisé en ce que** le premier rail orienté perpendiculairement est dirigé de son côté par au moins un deuxième rail orienté horizontalement fixé au plafond ou au sol, en vue du déplacement du point d'articulation perpendiculairement par rapport à l'axe longitudinal de l'avion.

9. Système selon l'une quelconque des revendications 1 à 8, **caractérisé en ce que** le deuxième organe de transport (10, 10' , 10" , 10"' , 10"") présente une coulisse (22) mobile dans le sens longitudinal de l'avion.

10. Système selon l'une quelconque des revendications 1 à 9, **caractérisé en ce que** le deuxième organe de transport (10, 10' , 10" , 10"' , 10'''') présente une surface de glissement (28) réglable en inclinaison.

11. Système selon l'une quelconque des revendications 1 à 10, **caractérisé en ce que** le dispositif de transport intermédiaire (2, 2', 2" , 2"', 2"") ou le deuxième organe de transport (10, 10' , 10" , 10"' , 10"") présente pour le déchargement une pince (32, 36) destinée à saisir l'article (6).

12. Système selon l'une quelconque des revendications 1 à 11, **caractérisé en ce que** le deuxième organe de transport (10, 10' , 10" , 10"' , 10'''') du dispositif de transport intermédiaire (2, 2', 2", 2"' , 2"") est un convoyeur à bande qui s'étend au-dessus d'une plaque de glissement (18) rigide disposée en dessous, la plaque de glissement (18) pouvant coulisser avec le convoyeur à bande entre deux articles (6), et l'article supérieur pouvant être emporté avec le convoyeur à bande (6).
